# FASCICULE DE BREVET EUROPEEN

(11) **EP 3 271 238 B1**
(45) Date de publication et mention de la délivrance du brevet: **08.05.2019**
(21) Numéro de dépôt: 16711881.9
(22) Date de dépôt: 14.03.2016
(51) Int. Cl.: B62D 25/14

(54) **STRUCTURE DE PLANCHE DE BORD D'UN HABITACLE DE VEHICULE AUTOMOBILE**
KONSOLENSTRUKTUR FÜR DEN FAHRGASTRAUM EINES KRAFTFAHRZEUGS
DASHBOARD STRUCTURE FOR A PASSENGER COMPARTMENT OF A MOTOR VEHICLE

(30) Priorité: 17.03.2015 FR 1552166
(43) Date de publication de la demande: 24.01.2018
(73) Titulaire: Renault S.A.S., 92100 Boulogne-Billancourt (FR)
(72) Inventeur: AUBINEAU, Ivan, 28410 Goussainville (FR)
(86) Numéro de dépôt international: PCT/FR2016/050554
(87) Numéro de publication internationale: WO 2016/146922

(56) Documents cités:
- FR-A1- 2 961 770
- JP-A- S6 015 231
- JP-A- H08 258 592
- JP-A- H09 240 316
- JP-A- 2006 248 260
- US-A- 5 857 726

## Description

La présente invention se rapporte à une structure de planche de bord d'un habitacle de véhicule automobile.

Dans le domaine des véhicules automobiles, les planches de bord sont installées transversalement dans l'habitacle, à l'avant des places du conducteur et du passager avant. La structure de planche de bord constitue l'ossature de la planche de bord. Cette structure assure notamment le maintien, du côté conducteur, du tableau de bord et des indicateurs de conduite, sur une partie centrale, de divers moyens de contrôle, par exemple des équipement de climatisation, d'autoradio et de navigation, et du côté passager, de l'airbag frontal du passager, comme le divulgue le document JPH08258592.

Afin de réduire les coûts de fabrication, on connait dans l'art antérieur des structures de planches de bord adaptées pour être installées aussi bien sur des véhicules présentant une direction à droite que sur des véhicules présentant une direction à gauche.

Cependant, ce type de structures communes nécessite généralement des adaptations complexes lors du montage du véhicule automobile, qui augmentent les coûts de fabrication.

En particulier, le cheminement des gaines de câblage de la planche de bord varient en fonction du type de direction du véhicule. L'emplacement des fixations de l'airbag de protection du passager avant lorsque le véhicule est à direction à gauche correspond à une zone de passage du câblage de la planche de bord dans les véhicules à direction à droite. Ceci impose généralement de procéder à des adaptations de la structure de planche de bord, allongeant le temps de montage de la planche de bord.

Aussi, il existe un besoin pour une structure de planche de bord rapidement adaptable pour être monté sur des véhicules à direction à droite et des véhicules à direction à gauche.

Dans le but de répondre à ce besoin, et selon un premier objet, on propose une structure de planche de bord d'un habitacle de véhicule automobile, ladite structure de planche de bord étant destinée à s'étendre à l'avant d'une place conducteur et d'une place passager adjacente, et étant adaptée pour être montée transversalement à l'avant de l'habitacle, ladite structure de planche de bord comprenant une partie centrale pour recevoir au moins un partie d'une console du véhicule automobile, et deux ailes latérales s'étendant sensiblement symétriquement par rapport à la partie centrale, respectivement en regard desdites places conducteur et passager.

La structure de planche de bord comprend un organe de fixation frangible, moulé d'une seule pièce avec ladite structure de planche de bord, l'une desdites ailes latérales comprenant une zone d'accrochage, ledit organe de fixation frangible étant détachable de la structure de planche de bord pour pouvoir être accroché sur ladite zone d'accrochage, de telle sorte qu'on puisse fixer un airbag de protection du passager avant sur ledit organe de fixation frangible détaché accroché.

Ainsi, on peut adapter la structure de planche de bord à un véhicule à direction à gauche dans lequel une gaine de câbles, ou tout autre élément mécanique et/ou électrique, passe au voisinage de la zone d'accrochage, et à un véhicule à direction à droite, dans lequel un airbag de protection du passager avant doit être attaché au voisine de la zone d'accrochage, à proximité du passage de la gaine de câbles.

De cette manière, la structure de planche de bord peut être adaptée plus rapidement pour son montage dans le véhicule automobile.

L'adaptation de la structure de planche de bord peut être effectuée manuellement, en détachant l'organe de fixation frangible moulé d'une pièce avec la structure de planche de bord et en venant l'accrocher, si nécessaire, sur la zone d'accrochage afin de pouvoir y fixer l'airbag de protection du passager avant.

En effet, dans le cas où l'airbag de protection du passager avant est accroché sur l'aile latérale ne comprenant pas la zone d'accrochage, il n'est pas nécessaire d'accrocher l'organe de fixation frangible sur la zone d'accrochage. Alors, l'organe de fixation peut être laissé solidaire de la structure de planche de bord, ou être détaché puis jeté.

Avantageusement et de manière non limitative, la zone d'accrochage peut présenter au moins une ouverture traversante, par exemple une ouverture traversante de forme sensiblement carré, rectangulaire, circulaire, ou tout autre forme d'ouverture adaptée, tandis que l'organe de fixation frangible comprend au moins une attache destinée à être engagée dans ladite ouverture traversante, par exemple une attache en forme de languette, de clips, ou tout autre attache adaptée, par exemple obtenue par moulage.

Ainsi, l'organe de fixation mobile peut être mis en prise sur la zone d'accrochage par des moyens peu coûteux et peu encombrants.

Avantageusement et de manière non limitative, l'organe de fixation frangible peut comprendre au moins une tige, solidaire de la structure de planche de bord, ladite tige étant apte à être rompue de manière à détacher l'organe de fixation frangible de la structure de planche de bord.

La tige de l'organe de fixation permet, lorsque la pièce est moulée, de maintenir l'organe de fixation frangible solidaire de la structure de planche de bord. La tige présente par exemple une section carré, circulaire, ou tout autre forme de section adaptée, et une résistance adaptée pour pouvoir être rompue, par exemple manuellement ou par l'usage d'un outil, par exemple une pince coupante, une paire de ciseaux ou tout autre outil adapté, de telle sorte qu'on puisse détacher l'organe de fixation frangible de manière relativement aisée.

La tige peut présenter une section réduite, par exemple une gorge, une section fragilisée, par exemple pré-rompue, pouvant être plus facilement sectionnée. Ainsi on peut prévoir le point de rupture de la tige.

En particulier, l'organe de fixation frangible peut comprendre trois tiges réparties de manière sensiblement régulière sur un bord de l'organe de fixation frangible en regard d'une face de la structure de planche de bord.

Ainsi l'organe de fixation frangible peut être solidaire de manière relativement immobile sur la structure de planche de bord, en particulier, les trois tiges permettent de limiter des rotations involontaires, ou une rupture involontaire de l'organe de fixation frangible avant qu'il ne soit séparé de la structure de planche de bord. En outre, si une ou deux tiges sont rompues involontairement, les tiges non rompues assurent le maintien à la structure de planche de bord.

L'organe de fixation frangible peut présenter une lumière, par exemple de forme sensiblement carré, rectangulaire, circulaire, oblongue, ovale ou tout autre forme adaptée, apte à recevoir un organe intermédiaire de fixation inséré dans ladite lumière.

En particulier, l'organe intermédiaire de fixation peut être un élément adapté pour permettre le vissage d'une vis, par exemple un élément en matériau tendre, par exemple en matériau polymère, de forme sensiblement complémentaire à la lumière de l'organe de fixation frangible.

Alternativement, on peut riveter, clipser, souder ou fixer par tout autre moyen adapté l'airbag sur l'organe intermédiaire de fixation inséré dans l'organe de fixation frangible détaché accroché sur la zone d'accrochage.

L'organe intermédiaire de fixation peut, par exemple, présenter un alésage central adapté pour recevoir une vis, de manière à permettre la fixation de l'airbag de protection du passager avant sur l'organe de fixation frangible.

Avantageusement et de manière non limitative, l'airbag de protection du passager avant peut être attaché sur ledit organe intermédiaire de fixation.

Ainsi, la structure de planche de bord peut être conçue de manière indépendante des moyens de fixation de l'airbag. De cette manière, il n'est pas nécessaire de prévoir les moyens nécessaires à la fixation de l'airbag sur la structure de planche de bord. L'organe intermédiaire de fixation pourra être choisi, indépendamment, et éventuellement après la fabrication de la structure de planche de bord, pour permettre la fixation de l'airbag à la structure de planche de bord.

Avantageusement et de manière non limitative, chaque aile latérale peut présenter une forme sensiblement arquée, ledit organe de fixation frangible étant moulé sur une face intérieure de l'arche formée par l'aile latérale comprenant la zone d'accrochage.

Ainsi, l'organe de fixation frangible peut être moulé sur une zone libre de la structure de planche de bord, du même côté que la zone d'accrochage. De cette manière, le montage de la structure de planche de bord est plus rapide.

Avantageusement et de manière non limitative, l'organe de fixation frangible peut être moulé au voisinage de la zone d'accrochage. Ainsi, on peut réduire le temps de manipulation nécessaire, par exemple par le monteur, pour détacher l'organe de fixation frangible puis pour l'accrocher sur la zone d'accrochage.

Du fait que l'organe de fixation frangible est au voisinage de la zone d'accrochage, il n'est, par exemple, pas nécessaire de translater ou pivoter la structure de planche de bord entre le moment où on détache l'organe de fixation frangible de la structure de planche de bord et où on l'accroche sur la zone d'accrochage.

Avantageusement et de manière non limitative, la structure de planche de bord peut être moulée d'une seule pièce. Ainsi, la structure de planche de bord peut présenter un coût de fabrication relativement faible. De cette manière on peut obtenir une planche de bord rapidement adaptable à une direction à gauche et à une direction à droite et obtenue de manière relativement peu coûteuse.

L'invention concerne également, selon un deuxième objet, un procédé de fixation d'un airbag de protection du passager avant sur une structure de planche de bord d'un habitacle de véhicule automobile, ladite structure de planche de bord étant destinée à s'étendre à l'avant d'une place conducteur et d'une place passager adjacente, et étant adaptée pour être montée transversalement à l'avant de l'habitacle, ladite structure de planche de bord comprenant une partie centrale pour recevoir au moins un partie d'une console du véhicule automobile, et deux ailes latérales s'étendant sensiblement symétriquement par rapport à la partie centrale, respectivement en regard desdites places conducteur et passager.

La structure de planche de bord comprend un organe de fixation frangible, moulé d'une seule pièce avec ladite structure de planche de bord, l'une desdites ailes latérales comprenant une zone d'accrochage, le procédé comprenant :
- une étape de détachage dudit organe de fixation frangible de la structure de planche de bord ;
- une étape d'accrochage dudit organe de fixation frangible sur ladite zone d'accrochage ;
- une étape d'attache d'un airbag de protection du passager avant sur ledit organe de fixation frangible détaché accroché.

L'invention concerne aussi, selon un troisième objet, un véhicule automobile comprenant une structure de planche de bord telle que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue de face d'une structure de planche de bord d'un habitacle de véhicule automobile, selon un mode de réalisation de l'invention ;
- la figure 2a est une vue d'un organe de fixation frangible solidaire de la structure de planche de bord selon le mode de réalisation de la figure 1 ; et
- la figure 2b est une vue d'un organe de fixation frangible détaché accroché sur la structure de planche de bord selon le mode de réalisation de la figure 1.

Dans la présente description, les termes avant, arrière, supérieur, inférieur, font référence aux directions avant et arrière du véhicule, lorsque la structure de planche de bord est montée sur le véhicule automobile. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

Un véhicule automobile, non représenté, comprend un habitacle. L'habitacle comprend une place conducteur et une place adjacente pour un passager avant.

Une structure de planche de bord 1 s'étend transversalement dans l'habitacle, à l'avant de la place conducteur et de la place pour le passager avant.

La structure de planche de bord 1 comprend une partie centrale 2 et deux ailes latérales 3,4.

La structure de planche de bord 1 est obtenue par moulage d'une seule pièce, par exemple dans un matériau polymère.

La partie centrale de la structure de planche de bord reçoit une partie de la console centrale du véhicule automobile, par exemple des éléments de navigation, par exemple un afficheur de GPS embarqué, un autoradio, des éléments de gestion de la climatisation de l'habitacle.

De chaque côté de la partie centrale 2, s'étendent deux ailes latérales 3,4.

Chaque aile latérale 3,4 présente une forme arquée.

Les deux ailes 3,4 s'étendent de manière sensiblement symétrique par rapport à la partie centrale 2. Autrement dit, les deux ailes latérales 3,4 s'étendent en transversal de l'habitacle du véhicule automobile, de manière opposée par rapport à la partie centrale 2.

Une aile latérale 3,4 s'étend à l'avant de la place conducteur, tandis que l'autre aile latérale 3,4 s'étend à l'avant de la place passager avant.

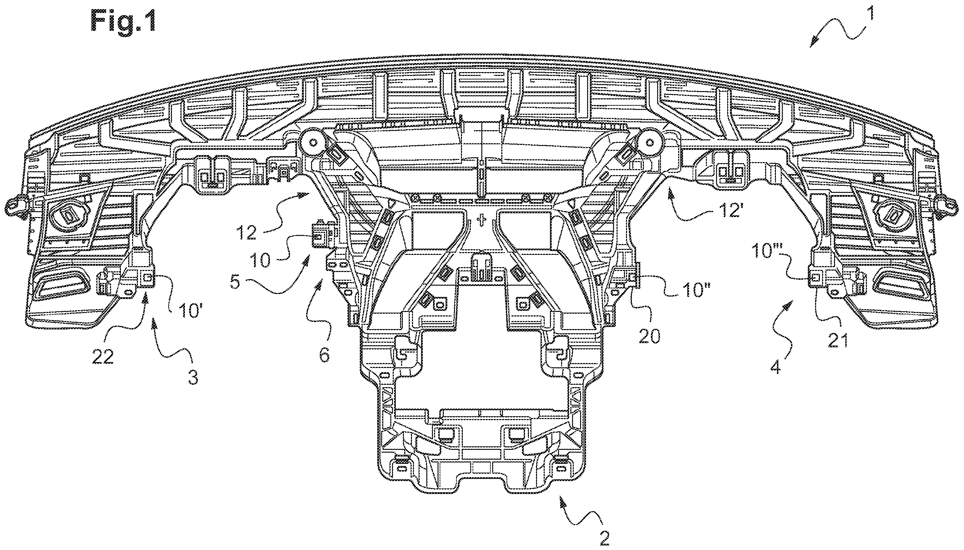

La structure de planche de bord 1 est conçue pour être simplement montée sur les deux types possibles de direction du véhicule automobile. En effet, lorsque le véhicule présente une direction à gauche, autrement dit lorsque le volant de direction est monté à gauche dans le véhicule automobile, l'aile latérale gauche 3, en référence à la figure 1, s'étend à l'avant de la place conducteur, alors que l'aile latérale droite 4 s'étend à l'avant de la place passager avant. A contrario, lorsque le véhicule présente une direction à droite, l'aile latérale gauche 3, s'étend à l'avant de la place passager avant, alors que l'aile latérale droite 4, s'étend à l'avant de la place conducteur.

L'aile latérale droite 4 comprend deux organes de fixation 20, 21 moulés sur une face intérieure 12' de l'arche formée par l'aile latérale droite 4.

Les deux organes de fixation 20,21 de l'aile latérale droite 4 sont en saillie de la face intérieure 12', et présentent chacun une lumière 10", 10'" de forme sensiblement carrée, pour recevoir un organe intermédiaire de fixation 11 destiné à permettre la fixation de l'airbag de protection du passager avant sur l'aile latérale droite 4, lorsque le véhicule présente une direction à gauche.

La fixation de l'airbag de protection du passager avant sur l'aile latérale droite 4 est une fixation destinée à simplifier le montage du véhicule. En effet, on fixe, dans un premier temps l'airbag à la structure de planche de bord 1, avant de le fixer de manière sécurisée sur la traverse avant du véhicule automobile, qui s'étend à l'avant de la structure de planche de bord 2.

Ici, l'organe intermédiaire de fixation 11 est un élément en forme de parallélépipède inséré à force dans la lumière 10", 10"', et présentant un alésage 11a effectué dans un matériau tendre, par exemple un matériau polymère tendre, une gomme ou tout autre matériau adapté, de manière à ce que l'airbag de protection du passager avant soit accroché dessus, par vissage d'une vis dans l'alésage 11a de l'organe intermédiaire de fixation 11.

L'aile latérale gauche 3 comprend un organe de fixation 22, moulé sur une face intérieure 12 de l'arche formée par l'aile latérale gauche 3.

L'organe de fixation 22 s'étend sur une extrémité gauche de l'arche formée par l'aile latérale gauche 3.

L'organe de fixation 22 présente aussi une lumière 10' correspondant aux lumières 10",10'" des organes de fixation 20,21 de l'aile latérale droite 4.

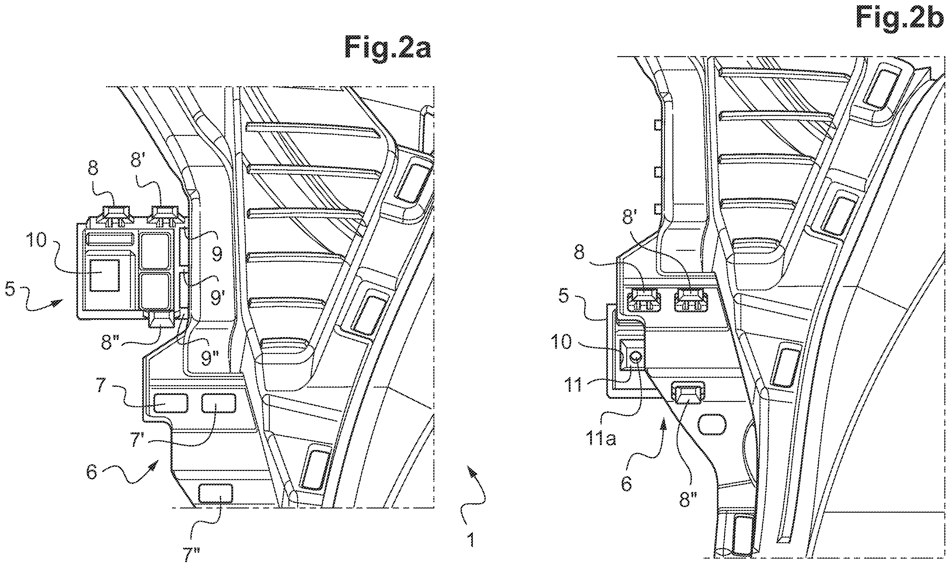

En référence aux figures 2a et 2b, l'aile latérale gauche 3 comprend en outre un organe de fixation frangible 5, de forme sensiblement carrée, présentant une lumière 10 adaptée pour recevoir un organe intermédiaire de fixation 11 tel que décrit précédemment.

L'organe de fixation frangible 5 est obtenu par moulage d'une pièce avec la structure de planche de bord 1.

Ici l'organe de fixation frangible 5 est moulé sur une face intérieure 12 de l'arche formée par l'aile latérale gauche 3.

L'organe de fixation frangible 5 comprend trois tiges 9,9',9" qui s'étendent sensiblement transversalement entre l'organe de fixation frangible 5 et la face intérieure 12 sur laquelle est fixé l'organe de fixation frangible 5.

Autrement dit, l'organe de fixation frangible 5 est maintenu solidairement à la structure de planche de bord 1 par les tiges 9,9',9".

Les tiges 9,9',9" peuvent être cassées de manière à détacher l'organe de fixation frangible 5 de la structure de planche de bord 1.

L'organe de fixation frangible 5 comprend trois attaches 8,8',8" destinées à s'accrocher sur une zone d'accrochage 6 de la structure de planche de bord 1.

Les attaches 8,8',8" présentent chacune une forme de languette 8, 8', 8" présentant une première extrémité, solidaire de l'organe de fixation frangible 5 et s'étendant dans une direction normale au plan dans lequel s'étend l'organe de fixation frangible 5, ici dans une direction longitudinale d'avant en arrière. Les languettes 8,8',8" présentent en outre une deuxième partie, s'étendant jusqu'à une extrémité libre, s'étendant dans une direction sensiblement perpendiculaire à la première partie, et formant saillie dans la direction verticale de l'organe de fixation frangible 5.

Ici, les languettes 8,8',8" sont installées en bordure de l'organe de fixation frangible, en particulier deux languettes 8,8' sont installées sur la bordure supérieure de l'organe de fixation frangible 5, alors que la troisième languette 8" est située sur la bordure inférieure de l'organe de fixation frangible 5.

Les languettes 8,8',8" forment un ensemble de clipsage de l'organe de fixation frangible 5.

La zone d'accrochage 6 s'étend sur une face intérieure 12 de l'aile latérale gauche, dans un plan sensiblement vertical transversal.

La zone d'accrochage 6 présente une faible saillie de la face intérieure 12 de manière à ne pas gêner le passage d'une gaine de câbles, non représentée, de la planche de bord. En effet, lorsque le véhicule est à direction à gauche, une gaine de câbles, non représentée, passe au voisinage de la zone d'accrochage 6, de telle sorte qu'il n'est pas possible d'installer à la place de la zone d'accrochage 6, un organe de fixation similaire aux organes de fixation 20,21 de l'aile latérale droite 4 et à l'organe de fixation 22 de l'aile latérale gauche 3.

La zone d'accrochage 6 présente trois ouvertures traversantes 7,7',7", de forme sensiblement complémentaires aux languettes 8,8',8".

Les languettes 8,8',8" sont adaptées pour s'insérer chacune respectivement dans une ouverture traversante 7,7',7", de telle sorte que, lorsque les trois languettes 8,8',8" sont insérées dans les ouvertures traversantes 7,7',7", l'organe de fixation frangible 5, préalablement détaché, est accroché à la zone d'accrochage 6.

En particulier les languettes 8,8',8" formant ensemble de clipsage permettent de fixer l'organe de fixation frangible 5 sur la zone d'accrochage 6 de manière hyperstatique.

Autrement dit, les languettes 8,8',8" sont adaptées pour se clipser dans les ouvertures traversantes 7,7',7", de manière à maintenir l'organe de fixation frangible 5 en place sur la zone d'accrochage 6.

Aussi, lorsque le véhicule est à direction à droite, on détache l'organe de fixation frangible 5 de la structure de planche de bord 1, en cassant les tiges 9,9',9" de l'organe de fixation frangible 5.

Ensuite, on accroche l'organe de fixation frangible 5 sur la zone d'accrochage 6, en insérant les languettes 8,8',8" dans les ouvertures traversantes 7,7',7" de la zone d'accrochage 6.

Lorsque l'organe de fixation frangible 5 est accroché sur la zone d'accrochage, on insère l'organe intermédiaire de fixation 11, correspondant aux organes intermédiaires de fixation 11 insérés dans les autres organes de fixation 20,21,22.

On attache ensuite, ici par vissage, l'airbag de protection passager, d'une part sur l'organe de fixation 22 de l'aile latérale gauche 3 et sur l'organe de fixation frangible 5, détaché de la structure de planche de bord 1 et accroché sur la zone de fixation 6.

Lorsque le véhicule présente une direction à gauche, l'organe de fixation frangible 5 n'est pas utile, la fixation de l'airbag de protection du passager se faisant du côté de l'aile latérale droite. L'organe de fixation frangible 5 peut donc être détaché et jeté, ou bien être éventuellement laissé en place tel qu'il est obtenu après moulage de la structure de planche de bord 1.

## Revendications

1. Structure de planche de bord (1) d'un habitacle de véhicule automobile, ladite structure de planche de bord (1) étant destinée à s'étendre à l'avant d'une place conducteur et d'une place passager adjacente, et étant adaptée pour être montée transversalement à l'avant de l'habitacle, ladite structure de planche de bord (1) comprenant une partie centrale (2) pour recevoir au moins un partie d'une console du véhicule automobile, et deux ailes latérales (3,4) s'étendant sensiblement symétriquement par rapport à la partie centrale (2), respectivement en regard desdites places conducteur et passager, **caractérisé en ce que** la structure de planche de bord (1) comprend un organe de fixation frangible (5), moulé d'une seule pièce avec ladite structure de planche de bord (1), l'une desdites ailes latérales (3,4) comprenant une zone d'accrochage (6), ledit organe de fixation frangible (5) étant détachable de la structure de planche de bord (1) pour pouvoir être accroché sur ladite zone d'accrochage (6), de telle sorte qu'on puisse fixer un airbag de protection du passager avant sur ledit organe de fixation frangible (5) détaché accroché.

2. Structure de planche de bord (1) selon la revendication 1, **caractérisée en ce que** la zone d'accrochage (6) présente au moins une ouverture traversante (7,7',7"), tandis que l'organe de fixation frangible (5) comprend au moins une attache (8,8',8") destinée à être engagée dans ladite ouverture traversante (7,7',7").

3. Structure de planche de bord (1), selon l'une quelconque des revendications 1 ou 2, **caractérisée en ce que** l'organe de fixation frangible (5) comprend au moins une tige (9,9',9") solidaire de la structure de planche de bord (1), ladite tige (9,9',9") étant apte à être rompue de manière à détacher l'organe de fixation frangible (5) de la structure de planche de bord (1).

4. Structure de planche de bord (1), selon l'une quelconque des revendications 1 à 3, **caractérisée en ce que** l'organe de fixation frangible (5) présente une lumière (10) apte à recevoir un organe intermédiaire de fixation (11) inséré dans ladite lumière (10).

5. Structure de planche de bord (1), selon la revendication 4, **caractérisée en ce que** l'airbag de protection du passager avant est attaché sur ledit organe intermédiaire de fixation (11).

6. Structure de planche de bord (1), selon l'une quelconque des revendications 1 à 5, **caractérisée en ce que** chaque aile latérale (3,4) présente une forme sensiblement arquée, ledit organe de fixation frangible (5) étant moulé sur une face intérieure (12) de l'arche formée par l'aile latérale (3,4) comprenant la zone d'accrochage (6).

7. Structure de planche de bord (1), selon l'une quelconque des revendications 1 à 6, **caractérisée en ce que** l'organe de fixation frangible (5) est moulé au voisinage de la zone d'accrochage (6).

8. Structure de planche de bord (1), selon l'une quelconque des revendications 1 à 7, **caractérisée en ce qu'**elle est moulée d'une seule pièce.

9. Procédé de fixation d'un airbag de protection du passager avant sur une structure de planche de bord (1) d'un habitacle de véhicule automobile, ladite structure de planche de bord (1) étant destinée à s'étendre à l'avant d'une place conducteur et d'une place passager adjacente, et étant adaptée pour être montée transversalement à l'avant de l'habitacle, ladite structure de planche de bord (1) comprenant une partie centrale (2) pour recevoir au moins un partie d'une console du véhicule automobile, et deux ailes latérales (3,4) s'étendant sensiblement symétriquement par rapport à la partie centrale (2), respectivement en regard desdites places conducteur et passager ; **caractérisé en ce que** la structure de planche de bord (1) comprend un organe de fixation frangible (5), moulé d'une seule pièce avec ladite structure de planche de bord (1), l'une desdites ailes latérales (3,4) comprenant une zone d'accrochage (6),
le procédé comprenant :
- une étape de détachage dudit organe de fixation frangible (5) de la structure de planche de bord (1) ;
- une étape d'accrochage dudit organe de fixation frangible (5) sur ladite zone d'accrochage (6) ;
- une étape d'attache d'un airbag de protection du passager avant sur ledit organe de fixation frangible (5) détaché accroché.

10. Véhicule automobile comprenant une structure de planche de bord (1) selon l'une quelconque des revendications 1 à 8.

## Patentansprüche

1. Armaturenbrettstruktur (1) eines Kraftfahrzeuginnenraums, wobei die Armaturenbrettstruktur (1) dazu bestimmt ist, sich vor einem Fahrersitz und einem benachbarten Beifahrersitz zu erstrecken und geeignet ist, quer an der Vorderseite des Innenraums montiert zu werden, wobei die Armaturenbrettstruktur (1) einen Mittelteil (2), um mindestens einen Teil einer Konsole des Kraftfahrzeugs aufzunehmen, und zwei Seitenflügel (3, 4) enthält, die sich im Wesentlichen symmetrisch zum Mittelteil (2) jeweils vor dem Fahrer- und dem Beifahrersitz erstrecken,
**dadurch gekennzeichnet, dass** die Armaturenbrettstruktur (1) ein brechbares Befestigungselement (5) enthält, das aus einem Stück mit der Armaturenbrettstruktur (1) geformt ist, wobei einer der Seitenflügel (3, 4) einen Einhängebereich (6) enthält, wobei das brechbare Befestigungselement (5) von der Armaturenbrettstruktur (1) lösbar ist, um im Einhängebereich (6) eingehängt werden zu können, so dass ein Airbag zum Schutz des vorderen Beifahrers am eingehängten losgelösten brechbaren Befestigungselement (5) befestigt werden kann.

2. Armaturenbrettstruktur (1) nach Anspruch 1, **dadurch gekennzeichnet, dass** der Einhängebereich (6) mindestens eine Durchgangsöffnung (7, 7', 7") aufweist, während das brechbare Befestigungselement (5) mindestens eine Klemmvorrichtung (8, 8', 8") enthält, die dazu bestimmt ist, in die Durchgangsöffnung (7, 7', 7") eingeführt zu werden.

3. Armaturenbrettstruktur (1), nach einem der Ansprüche 1 oder 2, **dadurch gekennzeichnet, dass** das brechbare Befestigungselement (5) mindestens eine fest mit der Armaturenbrettstruktur (1) verbundene Stange (9, 9', 9") enthält, wobei die Stange (9, 9', 9") zerbrochen werden kann, um das brechbare Befestigungselement (5) von der Armaturenbrettstruktur (1) loszulösen.

4. Armaturenbrettstruktur (1), nach einem der Ansprüche 1 bis 3, **dadurch gekennzeichnet, dass** das brechbare Befestigungselement (5) ein Langloch (10) aufweist, das ein Zwischenbefestigungselement (11) aufnehmen kann, das in das Langloch (10) eingeführt wird.

5. Armaturenbrettstruktur (1), nach Anspruch 4, **dadurch gekennzeichnet, dass** der Airbag zum Schutz des vorderen Beifahrers am Zwischenbefestigungselement (11) befestigt ist.

6. Armaturenbrettstruktur (1), nach einem der Ansprüche 1 bis 5, **dadurch gekennzeichnet, dass** jeder Seitenflügel (3, 4) eine im Wesentlichen gebogene Form aufweist, wobei das brechbare Befestigungselement (5) auf einer Innenseite (12) des vom Seitenflügel (3, 4) geformten Bogens geformt ist, der den Einhängebereich (6) enthält.

7. Armaturenbrettstruktur (1), nach einem der Ansprüche 1 bis 6, **dadurch gekennzeichnet, dass** das brechbare Befestigungselement (5) in der Nähe des Einhängebereichs (6) geformt ist.

8. Armaturenbrettstruktur (1), nach einem der Ansprüche 1 bis 7, **dadurch gekennzeichnet, dass** sie aus einem Stück geformt ist.

9. Verfahren zur Befestigung eines Airbags zum Schutz des vorderen Beifahrers an einer Armaturenbrettstruktur (1) eines Kraftfahrzeuginnenraums, wobei die Armaturenbrettstruktur (1) dazu bestimmt ist, sich vor einem Fahrersitz und einem benachbarten Beifahrersitz zu erstrecken und geeignet ist, quer an der Vorderseite des Innenraums montiert zu werden, wobei die Armaturenbrettstruktur (1) einen Mittelteil (2) zur Aufnahme mindestens eines Teils einer Konsole des Kraftfahrzeugs und zwei Seitenflügel (3, 4) enthält, die sich im Wesentlichen symmetrisch bezüglich des Mittelteils (2) je gegenüber den Fahrer- und Beifahrersitzen erstrecken;
**dadurch gekennzeichnet, dass** die Armaturenbrettstruktur (1) ein brechbares Befestigungselement (5) enthält, das aus einem Stück mit der Armaturenbrettstruktur (1) geformt ist, wobei einer der Seitenflügel (3, 4) einen Einhängebereich (6) enthält,
wobei das Verfahren enthält:
- einen Schritt des Lösens des brechbaren Befestigungselements (5) von der Armaturenbrettstruktur (1);
- einen Schritt des Einhängens des brechbaren Befestigungselements (5) am Einhängebereich (6) ;
- einen Schritt des Befestigens eines Airbags zum Schutz des vorderen Beifahrers am eingehängten losgelösten brechbaren Befestigungselement (5).

10. Kraftfahrzeug, das eine Armaturenbrettstruktur (1) nach einem der Ansprüche 1 bis 8 enthält.

## Claims

1. Dashboard structure (1) for a passenger compartment of a motor vehicle, said dashboard structure (1) being designed to extend to the front of a driver's seat and an adjacent passenger seat, and being capable of being mounted transversely at the front of the passenger compartment, said dashboard structure (1) comprising a central part (2) to receive at least one part of a console of the motor vehicle, and two lateral wings (3, 4) extending substantially symmetrically relative to the central part (2) respectively opposite said seats of the driver and passenger,
**characterized in that** the dashboard structure (1) comprises a frangible attachment member (5) which is molded integrally with said dashboard structure (1), one of said lateral wings (3, 4) comprising a fastening area (6), said frangible attachment member (5) being detachable from the dashboard structure (1) so as to be fastenable to said fastening area (6), such that an airbag for protecting the front passenger can be attached to said detached and fastened frangible attachment member (5).

2. Dashboard structure (1) according to Claim 1, **characterized in that** the fastening area (6) has at least one through-opening (7, 7', 7"), whilst the frangible attachment member (5) comprises at least one fixing (8, 8', 8") designed to be engaged in said through-opening (7, 7', 7").

3. Dashboard structure (1) according to either one of Claims 1 and 2, **characterized in that** the frangible attachment member (5) comprises at least one bar (9, 9', 9") fixed to the dashboard structure (1), said bar (9, 9', 9") being capable of being ruptured so as to detach the frangible attachment member (5) from the dashboard structure (1).

4. Dashboard structure (1) according to any one of Claims 1 to 3, **characterized in that** the frangible attachment member (5) has an aperture (10) capable of receiving an intermediate attachment member (11) inserted into said aperture (10).

5. Dashboard structure (1) according to Claim 4, **characterized in that** the airbag for protecting the front passenger is attached to said intermediate attachment member (11).

6. Dashboard structure (1) according to any one of Claims 1 to 5, **characterized in that** each lateral wing (3, 4) has a substantially arcuate shape, said frangible attachment member (5) being molded on an internal face (12) of the arcuate portion formed by the lateral wing (3, 4) comprising the fastening area (6).

7. Dashboard structure (1) according to any one of Claims 1 to 6, **characterized in that** the frangible attachment member (5) is molded in the vicinity of the fastening area (6).

8. Dashboard structure (1) according to any one of Claims 1 to 7, **characterized in that** it is molded integrally.

9. Method for fixing an airbag for protecting the front passenger on a dashboard structure (1) of a passenger compartment of a motor vehicle, said dashboard structure (1) being designed to extend to the front of a driver's seat and an adjacent passenger seat and being capable of being mounted transversely at the front of the passenger compartment, said dashboard structure (1) comprising a central part (2) to receive at least one part of a console of the motor vehicle, and two lateral wings (3, 4) extending substantially symmetrically relative to the central part (2), respectively opposite said seats of the driver and passenger;
**characterized in that** the dashboard structure (1) comprises a frangible attachment member (5) molded integrally with said dashboard structure (1), one of said lateral wings (3, 4) comprising a fastening area (6),
the method comprising:
- a step of detaching said frangible attachment member (5) from the dashboard structure (1);
- a step of fastening said frangible attachment member (5) to said fastening area (6);
- a step of fixing an airbag for protecting the front passenger to said detached and fastened frangible attachment member (5).

10. Motor vehicle comprising a dashboard structure (1) according to any one of Claims 1 to 8.
